(19) Europäisches Patentamt / European Patent Office / Office européen des brevets

(11) **EP 4 024 701 A1**

(12) **EUROPEAN PATENT APPLICATION**
published in accordance with Art. 153(4) EPC

(43) Date of publication:
06.07.2022 Bulletin 2022/27

(51) International Patent Classification (IPC):
*H02S 40/42* (2014.01)    *H02S 40/22* (2014.01)
*F28D 9/00* (2006.01)    *F28F 3/02* (2006.01)

(21) Application number: 20858433.4

(22) Date of filing: 11.06.2020

(52) Cooperative Patent Classification (CPC):
**F28D 9/00; F28F 3/02; H02S 40/22; H02S 40/42;**
Y02E 10/52

(86) International application number:
**PCT/KR2020/007565**

(87) International publication number:
**WO 2021/040204 (04.03.2021 Gazette 2021/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 26.08.2019  KR 20190104557
10.09.2019  KR 20190112291
08.06.2020  KR 20200069194

(71) Applicant: **Ryu, Won Dae**
**Seoul 06663 (KR)**

(72) Inventor: **Ryu, Won Dae**
**Seoul 06663 (KR)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(54) **THERMAL COLLECTOR AND MANUFACTURING METHOD THEREFOR**

(57)    A thermal collector according to one embodiment can comprise: a planar body arranged on one side of a solar panel, and formed by coupling a pair of layers through partial adhesion; a cavity formed on the planar body so that a junction box of the solar panel can protrude so as to penetrate the planar body; and a fluid guide unit which is formed in the space between the pair of layers, and which includes, between an inlet formed on one side of the planar body and an outlet formed on the other side of the planar body, a flow path for guiding fluid thermally exchanged with the solar panel.

FIG.1

## Description

Technical Field

The following description relates to a thermal collector and a method of manufacturing the same.

Background Art

A large amount of energy is required because of the advancement of industries and population growth. Recently, a solar collector and a solar module are used as alternative energy sources for using solar energy. Photovoltaic power generation module and system are advantageous in consistently supplying electrical energy by converting optical energy into electrical energy without separate maintenance. However, in the related art, the efficiency of an entire solar cell module deteriorates when only a part of a solar cell is shaded or a temperature of a panel increases. A half-cut cell with improved power production efficiency has been introduced to solve this problem.

A junction box for the half-cut cell is positioned at an approximately middle portion of the solar panel. For this reason, there is a problem in that a structure in which pipes are connected in parallel, like a cooling means in the related art, cannot accommodate the junction box for the half-cut cell. Accordingly, there is a need to develop a new cooling means capable of coping with the above-mentioned problems.

The above-mentioned background art is technical information that the inventors have retained to derive the present invention or have obtained in the course of deriving the present invention, and cannot be thus said to be technical information publicly known to the public before filing the invention.

Disclosure of the Invention

Technical Solutions

According to an aspect, there is provided a thermal collector including: a planar body disposed at one side of a solar panel and formed by coupling a pair of layers by partially joining the pair of layers; a cavity formed in the planar body so that a junction box for the solar panel protrudes while penetrating the planar body; and a fluid guide unit formed in a space between the pair of layers and including a flow path configured to guide a fluid, which exchanges heat with the solar panel, between an inlet and formed at one side of the planar body and an outlet formed at the other side of the planar body.

The thermal collector may further include an inlet/outlet port through which the fluid is supplied from the other side or the fluid is discharged to the outside, and the fluid guide unit may further include a slope formed between the inlet/outlet port and the flow path for the fluid and inclined to become distant from the inlet/outlet port in a direction parallel to a flow direction of the fluid as the distance from the inlet/outlet port increases in a direction perpendicular to the flow direction of the fluid.

The fluid guide unit may further include a uniform distribution region configured to merge or divide the fluid flowing along the flow path to allow the fluid to flow in a uniformly distributed state.

The uniform distribution region may include a collection channel disposed on at least one of upstream and downstream sides from the cavity on the basis of the flow of the fluid and having a shape communicating and elongated in a direction which is not parallel to a flow direction of the fluid.

The uniform distribution region may include a lattice branch channel formed as the flow path is divided into a plurality of paths and the adjacent divided paths are partially connected and communicate with each other.

The uniform distribution region may include a rectilinear branch channel defined by a linear adhesion portion formed by joining the planar body in a direction parallel to the flow direction of the fluid, and the fluid collected in the collection channel may flow while being distributed again by the rectilinear branch channel.

The collection channel may be disposed adjacent to the upstream or downstream side from the cavity, and the collection channel may be shaped to become distant from a center of the cavity in a direction parallel to the flow of the fluid as the distance from the center of the cavity increases in a direction perpendicular to the flow of the fluid.

The uniform distribution region may further include an intermediate channel elongated in a longitudinal direction of the flow path and disposed along a lateral side of the cavity, the intermediate channel may communicate with the collection channel, and the uniform distribution region has a relationship represented by the following expression.

[Expression]

$$1.5 \cdot n \cdot a \geq b \geq 0.5 \cdot n \cdot a$$

a: a longitudinal sectional area of the flow path communicating with the collection channel
b: a longitudinal sectional area of the intermediate channel
n: the number of multiple flow paths communicating with the collection channel

The fluid guide unit may further include a first uniform distribution region disposed between the slope and the flow path.

The first uniform distribution region may merge or divide the fluid flowing along the slope to allow the fluid to flow to the flow path in a uniformly distributed state.

The fluid guide unit may further include a second uniform distribution region disposed between the flow path and the cavity.

The fluid guide unit may further include a collection channel disposed between the flow path and the second uniform distribution region on the basis of the flow of the fluid and having a shape communicating and elongated in a direction which is not parallel to the flow direction of the fluid.

The planar body may include: a plurality of flow-path-dividing adhesion portions elongated in a longitudinal direction of the thermal collector and configured to define the flow path; and a bore-forming adhesion portion having a width larger than a width of each of the flow-path-dividing adhesion portions so that the bore-forming adhesion portion overlaps the two or more flow-path-dividing adhesion portions among the plurality of flow-path-dividing adhesion portions on the basis of the longitudinal direction of the thermal collector.

According to another aspect, there is provided a method of manufacturing a thermal collector for cooling a solar panel, the method including: stacking a pair of layers; forming a planar body having a flow path by joining the pair of layers along a preset fluid guide unit pattern; and forming a cavity in the planar body, in which the pair of layers is made of synthetic resin, and in which the forming of the planar body includes forming the fluid guide unit by welding, by high-frequency welding, a portion of the pair of layers which excludes the preset fluid guide unit pattern.

According to still another aspect, there is provided a method of manufacturing a thermal collector for cooling a solar panel, the method including: printing a preset fluid guide unit pattern on a pair of layers; stacking the pair of layers; forming a planar body by partially joining the pair of layers; forming a fluid guide unit on the planar body by injecting air into a space between the pair of layers; and forming a cavity in the planar body, in which the pair of layers is made of aluminum, and in which the forming of the planar body includes partially melting and joining the pair of layers by pressing and heating the pair of layers in a state in which the pair of layers is aligned.

The forming of the cavity in the planar body may include forming the cavity by boring a portion of the planar body where the fluid guide unit is not formed.

Brief Description of Drawings

FIG. 1 is a front view of a thermal collector according to an embodiment.
FIG. 2 is a partially enlarged view of FIG. 1.
FIG. 3 is an enlarged view of a cavity of the thermal collector according to the embodiment.
FIG. 4 is a cross-sectional view taken along cutting line I-I in FIG. 3.
FIG. 5 is a cross-sectional view taken along cutting line II-II in FIG. 3.

FIG. 6 is a front view of the thermal collector according to the embodiment.
FIG. 7 is a front view of the thermal collector according to the embodiment.
FIG. 8 is a front view of the thermal collector according to the embodiment.
FIG. 9 is a front view of the thermal collector according to the embodiment.
FIG. 10 is a front view of the thermal collector according to the embodiment.
FIG. 11 is an enlarged view of part a in FIG. 10.
FIG. 12 is a flowchart illustrating a method of manufacturing the thermal collector according to the embodiment.
FIG. 13 is a flowchart illustrating a method of manufacturing the thermal collector according to the embodiment.

Best Mode for Carrying Out the Invention

Hereinafter, embodiments will be described in detail with reference to the illustrative drawings. In giving reference numerals to constituent elements of the respective drawings, it should be noted that the same constituent elements will be designated by the same reference numerals, if possible, even though the constituent elements are illustrated in different drawings. Further, in the following description of the embodiments, a detailed description of publicly known configurations or functions incorporated herein will be omitted when it is determined that the detailed description obscures the subject matters of the present embodiments.

In addition, the terms first, second, A, B, (a), and (b) may be used to describe constituent elements of the embodiments. These terms are used only for the purpose of discriminating one constituent element from another constituent element, and the nature, the sequences, or the orders of the constituent elements are not limited by the terms. When one constituent element is described as being "connected", "coupled", or "attached" to another constituent element, it should be understood that one constituent element can be connected or attached directly to another constituent element, and an intervening constituent element can also be "connected", "coupled", or "attached" to the constituent elements.

The constituent element, which has the same common function as the constituent element included in any one embodiment, will be described by using the same name in other embodiments. Unless disclosed to the contrary, the configuration disclosed in any one embodiment may be applied to other embodiments, and the specific description of the repeated configuration will be omitted.

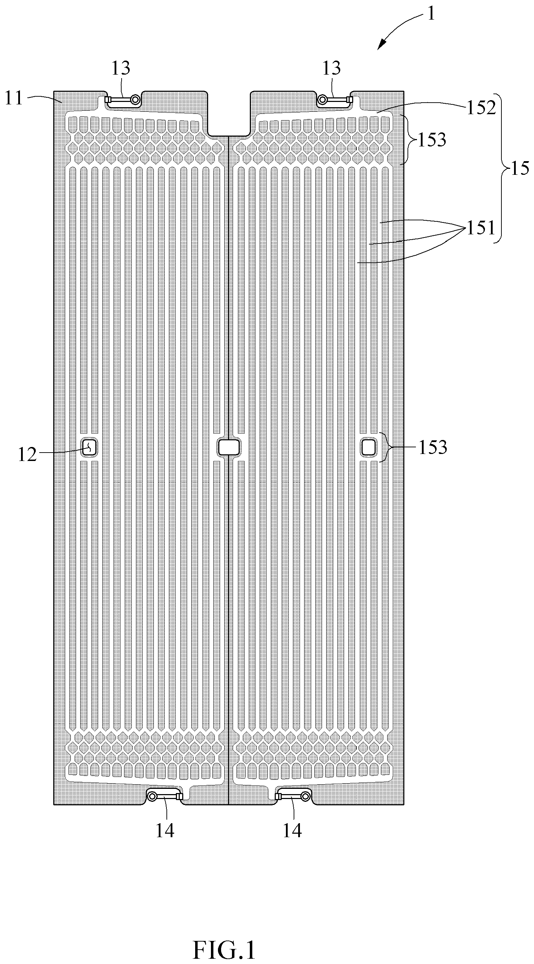

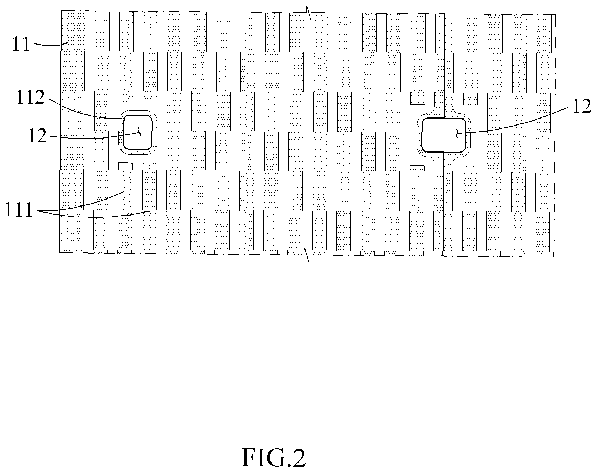

FIG. 1 is a front view of a thermal collector according to an embodiment, and FIG. 2 is a partially enlarged view of FIG. 1.

Referring to FIGS. 1 and 2, a thermal collector 1 may exchange heat with a solar panel while raising a temperature of the thermal collector 1 by absorbing heat generated in the solar panel. For example, the thermal collector 1 may include a planar body 11, cavities 12, inlets 13, outlets 14 and fluid guide units 15.

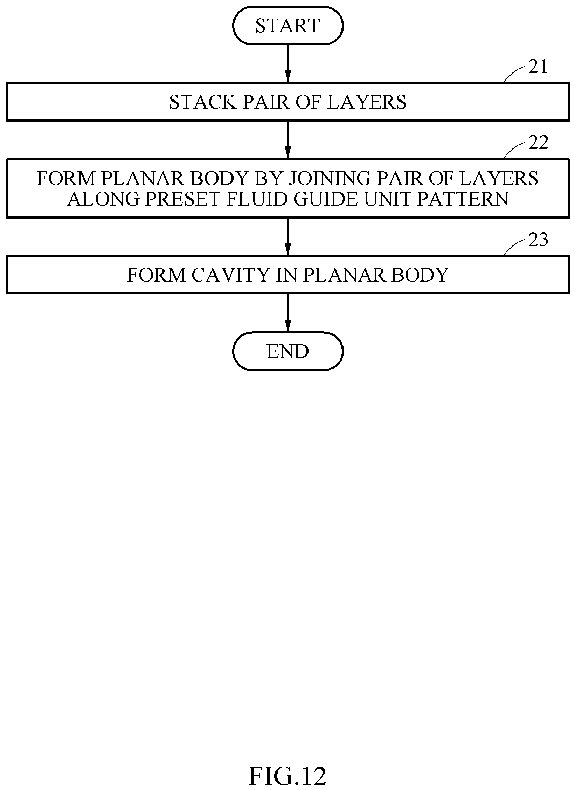

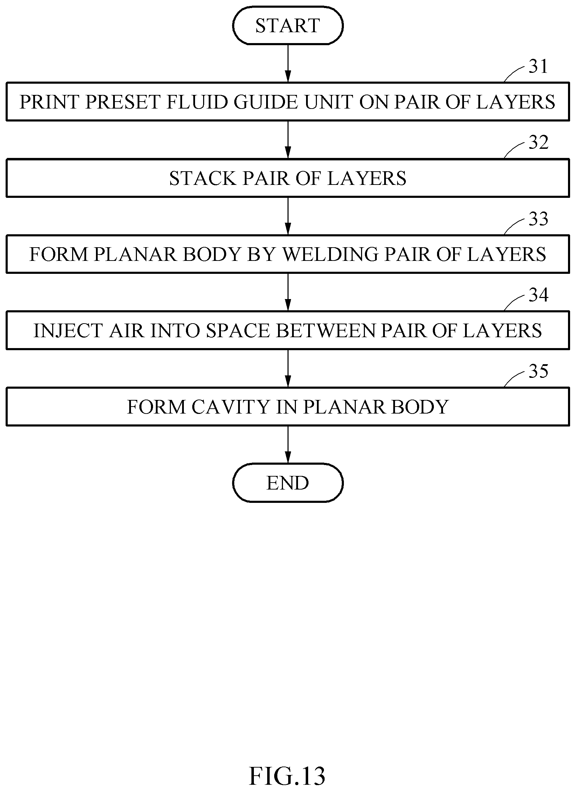

The planar body 11 may be disposed at one side of the solar panel and made by coupling a pair of layers by partially joining the pair of layers. For example, the pair of layers may be made of synthetic resin or aluminum and joined to each other. Methods of manufacturing the thermal collector 1 by partially joining the pair of layers will be described with reference to FIGS. 12 and 13. For example, the planar body 11 may be elongated in a longitudinal direction of the thermal collector 1 and include a portion where the pair of layers is locally joined. According to the structure described above, a fluid flowing in the thermal collector 1 cannot pass through the portion where the pair of layers is joined, and the fluid flows along a path where the pair of layers is not joined. For example, the planar body 11 may include flow-path-dividing adhesion portions 111 and bore-forming adhesion portions 112.

The flow-path-dividing adhesion portion 111 may be provided in plural to separate the plurality of fluid guide units 15. The flow-path-dividing adhesion portion 111 may be made by joining two opposite sides of areas of the pair of layers which are to be used for the fluid guide unit 15. For example, the flow-path-dividing adhesion portion 11 may be designed in consideration of a designed flow rate of the fluid, a residual time in the thermal collector 1, and the like.

The bore-forming adhesion portion 112 may have a larger width than the flow-path-dividing adhesion portion 111 so that the bore-forming adhesion portion 112 may overlap the two or more flow-path-dividing adhesion portions 111 among the plurality of flow-path-dividing adhesion portions 111 on the basis of the longitudinal direction of the thermal collector 1 (i.e., an upward/downward direction in FIG. 2). For example, as illustrated in FIG. 1, the bore-forming adhesion portion 112, which is disposed at a center of the thermal collector 1, may be shaped to overlap the four flow-path-dividing adhesion portions 111, and the bore-forming adhesion portions 112, which are disposed at left and right sides of the thermal collector 1, may each be shaped to overlap the two flow-path-dividing adhesion portions 111. For example, like the bore-forming adhesion portion 112 disposed at the center of the thermal collector 1, the bore-forming adhesion portion 112 may have a structure connected to the flow-path-dividing adhesion portion 111. The bore-forming adhesion portion 112 may be determined depending on a position of the junction box for the solar panel on which the thermal collector 1 is to be installed. FIG. 1 exemplarily illustrates the thermal collector 1 that may be mounted on a half-cut cell type solar panel on which the junction boxes are positioned on a middle portion and two opposite portions of the panel.

The cavity 12 may be formed on the planar body 11 so that the junction box for the solar panel may protrude while penetrating the planar body 11. For example, the cavity 12 may be formed in the bore-forming adhesion portion 112.

The fluid guide unit 15 may be formed in a space between the pair of layers and guide the fluid, which exchanges heat with the solar panel, between the inlet 13 positioned at one side of the planar body 11 and the outlet 14 positioned at the other side of the planar body 11. Meanwhile, the inlet 13 and the outlet 14 may be collectively referred to as "inlet/outlet ports". For example, the fluid guide unit 15 may be provided in plural. In addition, even though some of the plurality of fluid guide units 15 adjoin and communicate with one another, the overall cross-sectional area of the flow path may be constant between before and after some of the plurality of fluid guide units 15 communicate with one another. According to the structure described above, the fluid may flow through the thermal collector 1 at a predetermined speed through the plurality of fluid guide units 15, and the heat exchange may occur at a predetermined speed. For example, the fluid guide unit 15 may include flow paths 151, slopes 152, and uniform distribution regions 153.

The flow path 151 may linearly guide the fluid, which exchanges heat with the solar panel, between the inlet 13 formed at one side of the planar body 11 and the outlet 14 at the other side of the planar body 11.

The slope 152 may be inclined in a direction away from an end of the flow path 151 of the fluid guide unit 15 which is connected to the inlet 13 or the outlet 14. The slope 152 enables the fluid to smoothly flow into even the fluid guide unit 15 distant from the inlet 13. In addition, the slope 152 enables air and/or water to be smoothly discharged toward the outlet 14 from the fluid guide unit 15. For example, an angle of the slope 152 may be 2.5° or more.

The uniform distribution region 153 may merge or divide the fluid flowing along the adjacent flow paths 151, thereby allowing the fluid to flow in a uniformly distributed state. The uniform distribution regions 153 may be disposed at inflow and outflow sides. For example, the uniform distribution regions 153 may be disposed at one or both of the portion (i) between the inlet 13 and the flow path 151 and the portion (ii) between the flow path 151 and the outlet 14. For example, in a state in which the slope 152 is disposed between the inlet 13 and the flow path 151 or between the outlet 14 and the flow path 151, the uniform distribution region 153 may be disposed between the slope 152 and the flow path 151. For example, if there is the flow path 151 defined around the cavity 12 among the plurality of flow paths 151, there may occur a difference in loss of head between the fluids passing through the respective flow paths 151. Therefore, in a case in which the shape of the fluid guide unit 15 varies depending on the paths through which the fluid flows, the uniform distribution region 153 may be provided to allow the fluid to flow at a uniform flow rate, thereby uniformly cooling the thermal collector 1. For example, the amount of fluid, which passes through the slope 152 and then is discharged to the flow path 151, may vary. In this case, the slope 152 and the uniform distribution region 153 may be disposed side by side. According to the structure described above, even though the fluids flowing in the longitudinal direction of the slope 152 are discharged from the slopes 152 at different flow rates, the fluids may flow through the uniform distribution regions 153 and thus uniformly distributed to the plurality of flow paths 151 connected to the uniform distribution regions 153. For example, the uniform distribution region 153 may include collection channels 1531 and intermediate channels 1534.

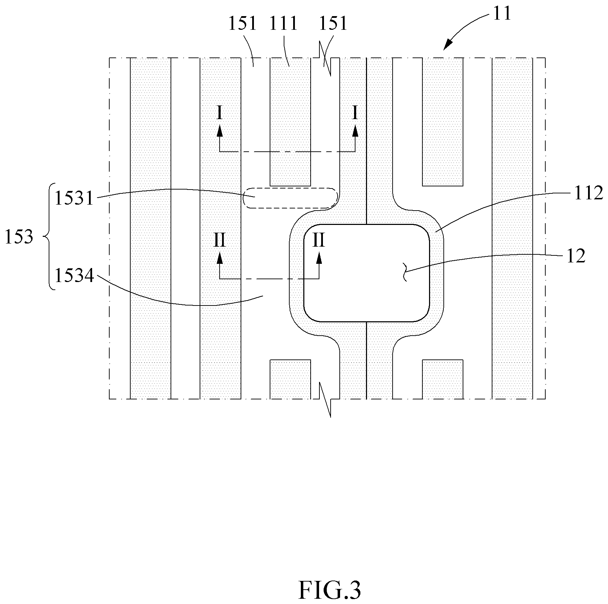

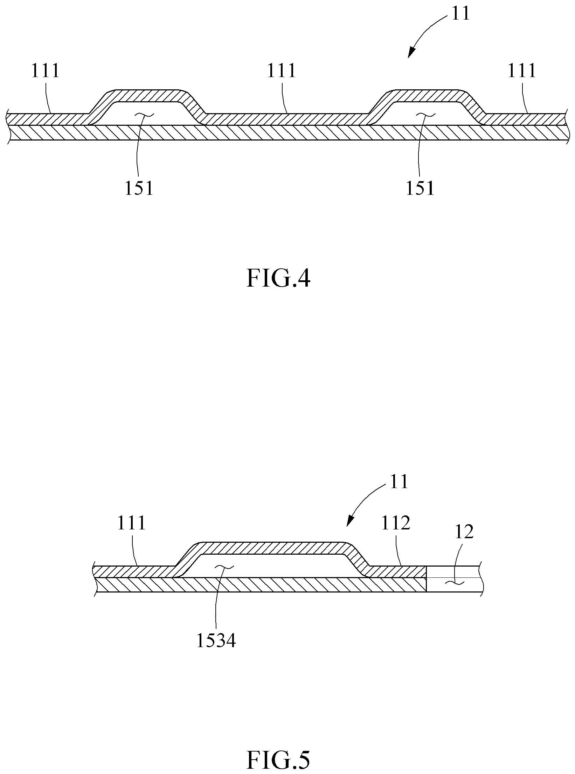

FIG. 3 is an enlarged view of the cavity of the thermal collector according to the embodiment, FIG. 4 is a cross-sectional view taken along cutting line I-I in FIG. 3, and FIG. 5 is a cross-sectional view taken along cutting line II-II in FIG. 3.

Referring to FIGS. 3, 4, and 5, in a case in which the flow path 151 extends in one direction and then meets the cavity 12, the uniform distribution region 153 may be disposed to extend from the flow path 151 and defined around the cavity 12 along a periphery of the bore-forming adhesion portion 112. In this case, on the basis of the flow of the fluid, the collection channels 1531 may be disposed to transversely communicate with the two or more flow paths 151, and the intermediate channel 1534 may be disposed at a lateral portion of the cavity 15 and connected to the collection channels 1531 respectively disposed at upstream and downstream sides from the cavity 15.

FIG. 4 illustrates cross-sectional flow areas $A_1$ of the plurality of flow paths 151 disposed adjacent to the inlet 13 on the basis of the bore-forming adhesion portion 112 and positioned at one side on the basis of the center of the cavity 12. FIG. 5 illustrates a cross-sectional flow area $A_2$ of the single intermediate channel 1534 disposed adjacent to the bore-forming adhesion portion 112 in a width direction. For example, a sum of the cross-sectional flow areas $A_1$ of the plurality of flow paths 151 before the communication may be equal to the cross-sectional flow area $A_2$ of the intermediate channel 1534 in the communication state. According to the structure described above, since the total cross-sectional flow area before the plurality of fluid guide units 15 communicate with one another is equal to the total cross-sectional flow area after the plurality of fluid guide units 15 communicate with one another, the speed of the fluid may not change.

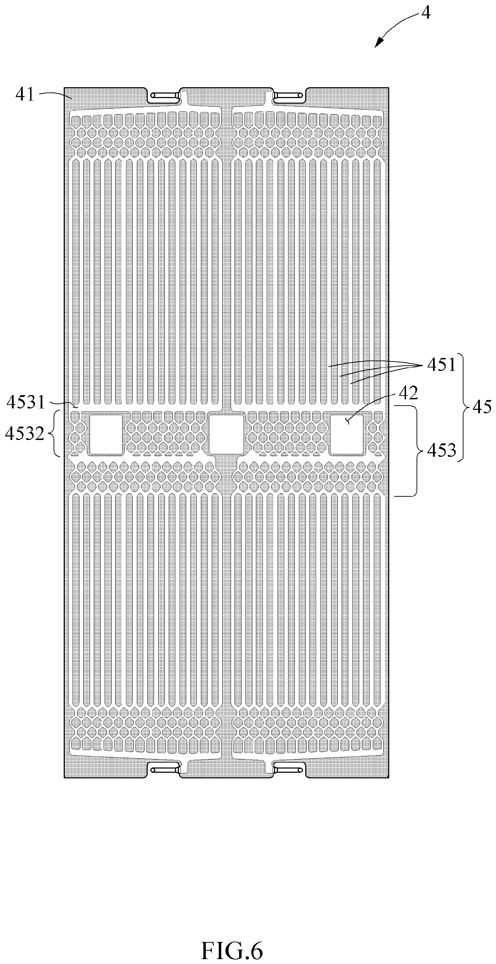

FIG. 6 is a front view of the thermal collector according to the embodiment.

Referring to FIG. 6, a thermal collector 4 may include a planar body 41, cavities 42, inlets, outlets, and fluid guide units 45. The fluid guide unit 45 may include flow paths 451, slopes, and uniform distribution regions 453.

The uniform distribution regions 453 may be disposed not only at inflow and outflow sides but also at a periphery of the cavity 42. The uniform distribution region 453 enables the fluid having passed through the cavity 42 to flow uniformly through all the flow paths 451 even though uniformity deteriorates during a process in which the fluid flows along the periphery of the cavity 42. The uniform distribution region 453 may include collection channels 4531 and lattice branch channels 4532.

The collection channel 4531 may be disposed at an upstream or downstream side or the upstream and downstream sides from the cavity 42 on the basis of the flow of the fluid. The collection channel 4531 may allow the two or more flow paths 451 to communicate with one another in a direction which is not parallel to a longitudinal direction of the flow path 451. For example, the collection channel 4531 may meet the flow path 451 in a direction perpendicular to the longitudinal direction of the flow path 451, and the fluids discharged from the respective flow paths 451 may be collected entirely. When the fluid passes through the collection channel 4531 before the shape in which the fluid flows in the thermal collector 4 changes, the fluid may be collected at a location and then distributed, such that the fluid may be uniformly distributed. In addition, the collection channel 4531 may allow the fluid, which deteriorates in flow uniformity while passing through the cavity 42, to uniformly flow again.

The lattice branch channels 4532 may be formed at left and right sides of the cavity 42 and a rear flow side of the cavity 42 on the basis of the flow direction of the fluid. The lattice branch channel 4532 may be formed as the flow path 451 is divided into a plurality of paths and the adjacent divided paths are partially connected and communicate with each other. For example, assuming that a part of the planar body 41 joined between the plurality of paths of the lattice branch channel 4532 is referred to as a unit adhesion part, the single unit adhesion part may be disposed adjacent to the four or more unit adhesion parts. For example, as illustrated in FIG. 6, in a case in which the unit adhesion part has a regular hexagonal lattice shape, the single unit adhesion part may be disposed adjacent to the six unit adhesion parts.

For example, as illustrated in FIG. 6, on the basis of the flow direction of the fluid, first collection channels 4531 may be disposed at the upstream side from the cavity 42, first lattice branch channels 4532 may be disposed at left and right sides of the cavity 42, second collection channels 4531 may be disposed at a rear flow side of the cavity 42, and second lattice branch channels 4532 may be disposed at rear flow sides of the second collection channels 4531. According to the structure described above, the fluid having passed through the flow path 451 at the inflow side may be collected in the first collection channel 4531 before the fluid enters the periphery of the cavity 42. Then, the fluid may uniformly flow into the first lattice branch channels 4532 formed at the left and right sides of the cavity 42. In addition, the fluid may be collected again in the second collection channel 4531 and uniformly flow into the second lattice branch channel 4532, such that the fluid may uniformly flow in the respective parts.

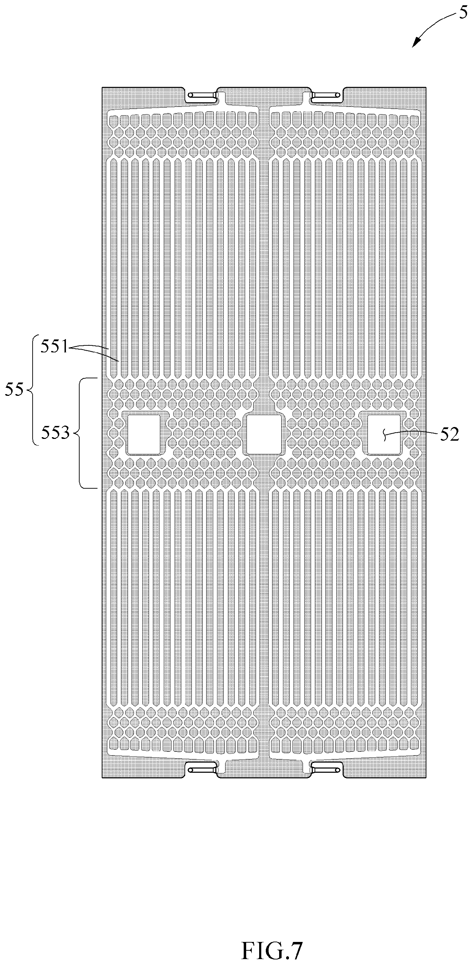

FIG. 7 is a front view of the thermal collector according to the embodiment.

Referring to FIG. 7, a thermal collector 5 may include a planar body, cavities 52, inlets, outlets, and fluid guide units 55. The fluid guide unit 55 may include flow paths 551, slopes, and uniform distribution regions 553.

For example, the uniform distribution region 553 may be shaped such that the upstream and downstream sides are symmetric with respect to the cavity 52.

The uniform distribution regions 553 may be disposed at inflow and outflow sides, a periphery of the cavity 52, and upper and lower sides of the cavity 52. The uniform distribution region 553 enables the fluid having passed through the cavity 52 to flow uniformly through all the flow paths 515 even though uniformity deteriorates during a process in which the fluid flows along the periphery of the cavity 52. For example, the uniform distribution region 553 may include lattice branch channels.

For example, vertices of polygonal unit adhesion parts, which define the lattice branch channels, may be respectively positioned at ends of the flow paths 551. In other words, the vertex of the unit adhesion part may be positioned between the pair of adjacent flow-path-dividing adhesion portions. According to the structure described above, it is possible to further improve flow uniformity of the fluid flowing into the uniform distribution region 553 from the flow path 551.

The lattice branch channels may be formed at the left and right sides of the cavity 52 and the upstream and downstream sides from the cavity 52 on the basis of the flow direction of the fluid. For example, on the basis of the flow direction of the fluid, the lattice branch channel disposed at the upstream side from the cavity may be referred to as a third lattice branch channel, the lattice branch channel disposed at each of the left and right sides of the cavity may be referred to as a fourth lattice branch channel, and the lattice branch channel disposed at the downstream side from the cavity 52 may be referred to as a fifth lattice branch channel. According to the structure described above, since the uniform distribution region 553 is symmetric with respect to the cavity 52, the thermal collector 5 may be reversibly utilized, and the inlet and the outlet may be used as the outlet and the inlet, respectively.

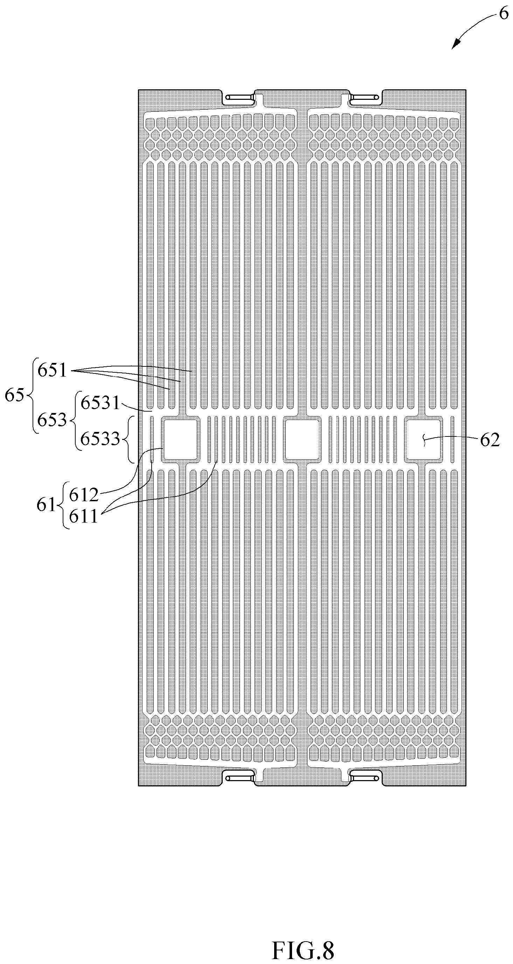

FIG. 8 is a front view of the thermal collector according to the embodiment.

Referring to FIG. 8, a thermal collector 6 may include a planar body 61, cavities 62, inlets, outlets, and fluid guide units 65. The planar body 61 may include linear adhesion portions 611 and bore-forming adhesion portions 612. The fluid guide unit 65 may include flow paths 651, slopes, and uniform distribution regions 653.

The linear adhesion portion 611 is a portion where the planar body 61 is joined in a direction of the flow path 651. For example, the linear adhesion portions 611, together with the flow-path-dividing adhesion portions or other linear adhesion portions 611, may define rectilinear branch channels 6533.

The uniform distribution regions 653 may be disposed not only at inflow and outflow sides but also at a periphery of the cavity 62. In this case, the respective uniform distribution regions 653 need not necessarily have the same shape. Lattice branch channels may be disposed at the inflow and outflow sides, and collection channels 6531 and the rectilinear branch channels 6533 may be disposed at the periphery of the cavity 62. For example, the uniform distribution region 653 may include the collection channels 6531, the lattice branch channels, and the rectilinear branch channels 6533.

On the basis of the flow of the fluid, the collection channels 6531 may include third collection channels 6531 disposed at the upstream side from the cavity 62, and fourth collection channels 6531 disposed at the downstream side of the cavity 62. The fluid having passed through the third collection channel 6531 may be collected at a location before entering the rectilinear branch channel 6533 and then uniformly distributed. The fluid having passed through the fourth collection channel 6531 may be collected at a location after passing through the rectilinear branch channel 6533 and then uniformly distributed to the flow path 651.

The rectilinear branch channel 6533 may be formed by the linear adhesion portion 611 formed by joining the planar body 61 in the direction of the flow path 651. The fluid collected in the third collection channel 6531 may flow while being distributed again by the rectilinear branch channel 6533. The plurality of linear adhesion portions 611 may be formed between the two bore-forming adhesion portions 612 in which the cavity 62 is formed.

For example, as illustrated in FIG. 8, a width of the rectilinear branch channel 6533, which is closest to the cavity 62 among the rectilinear branch channels 6533, may be larger than a width of another rectilinear branch channel 6533. In other words, a width from the cavity 62 to the linear adhesion portion 611 closest to the cavity 62 may be larger than a width between the pair of adjacent linear adhesion portions 611. With the structure described above, a pressure loss of the fluid flowing around the cavity 62 may be reduced.

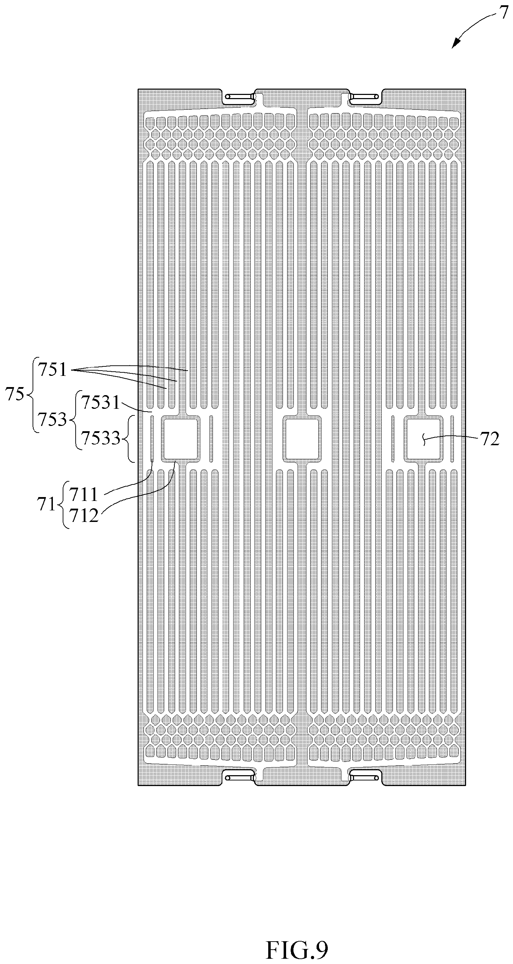

FIG. 9 is a front view of the thermal collector according to the embodiment.

Referring to FIG. 9, a thermal collector 7 may include a planar body 71, cavities 72, inlets, outlets, and fluid guide units 75. The planar body 71 may include linear adhesion portions 711 and bore-forming adhesion portions 712. The fluid guide unit 75 may include flow paths 751, slopes, and uniform distribution regions 753.

The uniform distribution regions 753 may be disposed not only at inflow and outflow sides but also at a periphery of the cavity 72. For example, the respective uniform distribution regions 753 need not necessarily have the same shape. Lattice branch channels may be disposed at the inflow and outflow sides, and collection channels 7531 and rectilinear branch channels 7533 may be disposed at the periphery of the cavity 72, as illustrated in FIG. 9. For example, the uniform distribution region 753 may be formed only on a portion adjacent to the cavity 72, and the flow paths 751 may be continuously formed in a central region between the pair of adjacent cavities 72 without the uniform distribution region 753. In other words, in comparison with the configuration illustrated in FIG. 8, the uniform distribution region 753 may not be formed at the periphery of the cavity 72 excluding the left and right regions adjacent to the cavity 72. For example, the uniform distribution regions 753 formed in the left and right regions adjacent to the cavity 72 may include the collection channels 7531 and the rectilinear branch channels 7533.

On the basis of the flow of the fluid, the collection channels 7531 may include fifth collection channels 7531 disposed at the upstream side from the cavity 72, and sixth collection channels 7531 disposed at the downstream side from the cavity 72. The fluid having passed through the fifth collection channel 7531 may be collected at a location before entering the rectilinear branch channel 7533 and then uniformly distributed. The distributed fluid may pass through the rectilinear branch channel 7533 and then be collected in the sixth collection channel 7531. and then the fluid may be uniformly distributed to the flow path 751.

The rectilinear branch channel 7533 may be formed by the linear adhesion portion 711 that joins the planar body 71 in the direction of the flow path 751. The fluid collected in the fifth collection channel 7531 may flow while being distributed again by the rectilinear branch channel 7533. For example, the pair of linear adhesion portions 711 may be formed symmetrically at the left and right sides of the bore-forming adhesion portion 712. For example, a width of the linear adhesion portion 711 may be smaller than a width of the flow-path-dividing adhesion portion. According to the structure described above, a width of an individual passageway of the rectilinear branch channel 7533, through which the fluid flows, may be larger than a width of each of the flow paths 751. As a result, it is possible to reduce non-uniformity of flow that occurs because of the area occupied by the cavity 72.

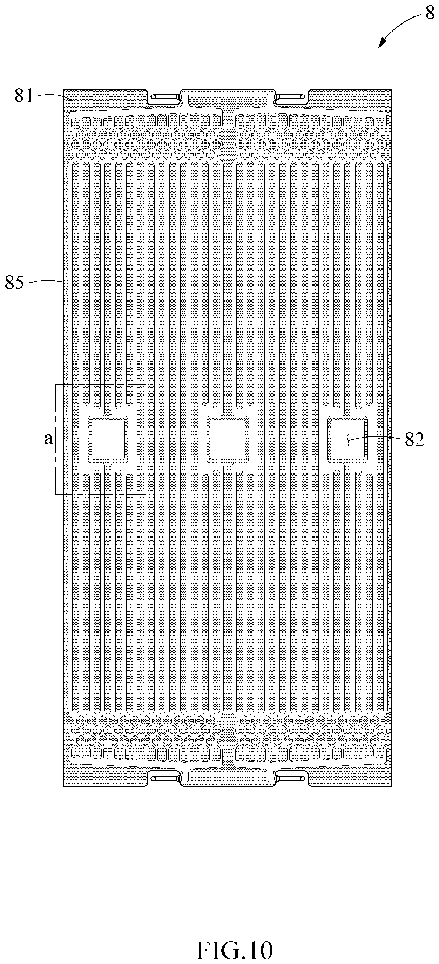

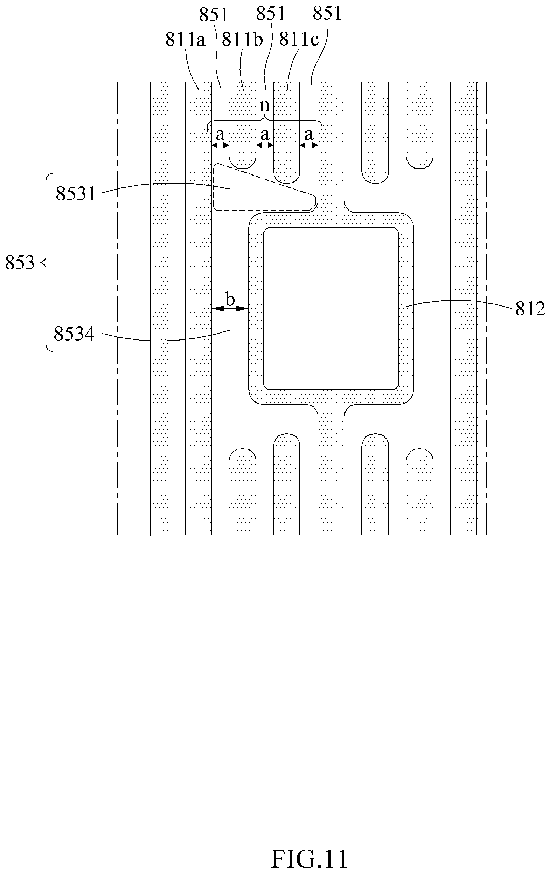

FIG. 10 is a front view of the thermal collector according to the embodiment, and FIG. 11 is an enlarged view of part a in FIG. 10.

Referring to FIGS. 10 and 11, a thermal collector 8 may include a planar body 81, cavities 82, inlets, outlets, and fluid guide units 85.

The planar body 81 may include flow-path-dividing adhesion portions 811a, 811b, and 811c and bore-forming adhesion portions 812. The fluid guide unit 85 may include flow paths 851, slopes, and uniform distribution regions 853.

The uniform distribution region 853 formed at the periphery of the cavity 82 may include collection channels 8531 and intermediate channels 8534. In this case, the collection channels 8531 are portions, which are disposed adjacent to the cavity 82 and communicate with the plurality of flow paths 851 positioned at the upstream or downstream side from the cavity 82. The collection channel 8531 may not include the joined portion. In this case, the intermediate channel 8534 is elongated in the longitudinal direction of the flow path 851 and disposed along a lateral side of the cavity 82. The intermediate channel 8534 may allow the collection channel 8531 formed at the upstream side from the cavity 82 and the collection channel 8531 formed at the downstream side from the cavity 82 to communicate with each other.

For example, the collection channel 8531 may be shaped such that the collection channel 8531 becomes distant upward and downward (in a direction parallel to the flow of the fluid) from the center of the cavity 82 as the distance from the center of the cavity 82 increases toward the left and right sides (a direction perpendicular to the flow of the fluid). In other words, a shortest distance between an end of each of the flow paths 851 connected to the collection channel 8531 and an extension line extending from one surface of the cavity 82 perpendicular to the flow path may increase as the distance from the center of the cavity 82 to the left or right side increases. In other words, when viewed in a direction parallel to the flow of the fluid, the ends of the flow-path-dividing adhesion portion 811b and 811c, which overlap the collection channel 8531, may become distant from an extension line extend from one surface of the bore-forming adhesion portion 812 perpendicular to the flow path 851 as the distance from the center of the cavity 82 to the left or right side increases. For example, as illustrated in FIG. 11, the collection channel 8531 may have a right-angled triangular shape, and this shape may decrease a problem of deterioration in flow uniformity of the fluid caused by the bore-forming adhesion portion 812.

For example, assuming that a longitudinal sectional area of each of the flow paths 851 communicating with the collection channel 8531 is a, the number of multiple flow paths 851 communicating with the collection channel 8531 is n, and a longitudinal sectional area of the intermediate channel 8534 is b, a relationship may be established according to the following Expression. For example, a and b may be understood as widths of the constituent elements when a height of each of the flow paths 851 is equal to a height of the intermediate channel 8534.

[Expression]
$$1.5 \cdot n \cdot a \geq b \geq 0.5 \cdot n \cdot a$$

a: the longitudinal sectional area of each of the flow paths 851 communicating with the collection channels 8531
b: the longitudinal sectional area of the intermediate channel 8534
n: the number of multiple flow paths 851 communicating with the collection channel 8531

According to the design condition described above, a flow rate Q2 of the fluid flowing along the intermediate channel 8534 may be a value of 50% to 150% of a total flow rate Q1 of the fluid flowing along the plurality of flow paths 851 communicating with the collection channel 8531, such that the fluid may smoothly flow along the periphery of the cavity 82. For example, the flow rate Q2 of the fluid flowing along the intermediate channel 8534 may be equal to the total flow rate Q1 of the fluid flowing along the plurality of flow paths 851 communicating with the collection channel 8531.

FIG. 12 is a flowchart illustrating a method of manufacturing the thermal collector according to the embodiment.

Referring to FIG. 12, a method of manufacturing the thermal collector 1 according to the embodiment may include step 21 of stacking the pair of layers, step 22 of forming the planar body by joining the pair of layers along a preset fluid guide unit pattern, and step 23 of forming the cavity in the planar body.

In step 21, the pair of layers may be made of a material, such as synthetic resin, similar to a material of a hot water mat, for example.

For example, step 22 may be performed by using high-frequency welding. The remaining portions, except for the portions where the fluid guide units 15 are to be formed, may be welded by applying high-frequency waves to the pair of stacked layers by using a horn. For example, the pair of layers may be joined by various methods, such as friction welding, ultrasonic welding, thermal bonding, welding, aluminum roll bonding, or bonding using a general bonding agent, in addition to the high-frequency welding.

For example, step 23 may be performed by forming the cavity 12 in the portion where the fluid guide unit 15 is not formed. In other words, the cavity 12, through which the junction box may protrude while penetrating the cavity 12, may be formed by boring the center of the portions joined in step 22 without affecting the fluid guide unit 15. For example, the portions in the planar body 11, where the fluid guide unit 15 is not formed, are the flow-path-dividing adhesion portions 111 or the bore-forming adhesion portions 112. Among these portions, the bore-forming adhesion portion 112 is bored to form the cavity. The junction box for the solar panel may penetrate the cavity 12 bored in the bore-forming adhesion portion 112. Therefore, since the thermal collector has the structure capable of accommodating the junction box while allowing the junction box to penetrate the central portion of the planar body 11, the thermal collector 1 may be applied even to the half-cut cell in which the junction box is positioned at the central portion of the solar panel.

FIG. 13 is a flowchart illustrating a method of manufacturing the thermal collector according to the embodiment.

Referring to FIG. 13, a method of manufacturing the thermal collector 1 according to the embodiment may include step 31 of printing a preset fluid guide unit pattern on the pair of layers, step 32 of stacking the pair of layers, step 33 of forming the planar body by partially joining the pair of layers, step 34 of injecting air into a space between the pair of layers, and step 35 of forming the cavity in the planar body.

In step 31, the pair of layers may be made of a metallic material such as aluminum, for example. Step 31 may include a step of printing the preset flow path pattern with ink on at least one layer among the pair of layers by using a silk-screen method.

For example, step 33 may include a step of joining the pair of layers by partially melting the pair of layers by pressing and heating the pair of layers in a state in which the pair of layers stacked in step 32 is aligned. The portion on which the ink is applied in step 31 is not melted, the portion on which the ink is not applied is melted, and these portions are joined to the corresponding layers, such that a gap in the form of the preset fluid guide unit pattern may be formed between the pair of layers. In step 33, the flow-path-dividing adhesion portion 111 and the bore-forming adhesion portion 112 are formed.

In step 34, air is injected into the space between the pair of layers of the planar body formed in step 34, such that the pair of layers may be inflated except for the portions of the pair of layers joined to each other. The portion, which is inflated as described above, defines the fluid guide unit 15.

Step 35 may include a step of forming the cavity 12 by boring a part of the portion where the fluid guide unit 15 is not formed. Meanwhile, step 35 is illustrated as being performed after step 34, the embodiment is not necessarily limited thereto. For example, step 35 may be performed before step 34.

Meanwhile, both the pair of layers may have the same thickness, but the pair of layers may have different thicknesses. In the case in which the pair of layers has different thicknesses, the layer having a small thickness is further inflated to form the fluid guide unit 15 and the layer having a large thickness may maintain relatively high flatness even though the same inflation pressure is applied to the surfaces defining the space between the pair of layers in step 34. In this case, the layer having with high flatness is in close contact with the solar panel, such that the contact surface between the solar panel and the thermal collector 1 may be improved, and as a result, the cooling efficiency may be improved.

While the embodiments have been described above with reference to the limited drawings, the embodiments may be variously modified and altered from the disclosure by those skilled in the art. For example, appropriate results may be achieved even though the described technologies are performed in different orders from the described method, the described constituent elements such as, the structures, the apparatuses, and the like are coupled or combined in different manners from the described method, and/or the constituent elements are substituted with or replaced by other constituent elements or equivalents.

**Claims**

1. A thermal collector comprising:

   a planar body disposed at one side of a solar panel and formed by coupling a pair of layers by partially joining the pair of layers;
   a cavity formed in the planar body so that a junction box for the solar panel protrudes while penetrating the planar body; and
   a fluid guide unit formed in a space between the pair of layers and comprising a flow path configured to guide a fluid, which exchanges heat with the solar panel, between an inlet and formed at one side of the planar body and an outlet formed at the other side of the planar body.

2. The thermal collector of claim 1, wherein the thermal collector further comprises an inlet/outlet port through which the fluid is supplied from the other side or the fluid is discharged to the outside, and wherein the fluid guide unit further comprises a slope formed between the inlet/outlet port and the flow path for the fluid and inclined to become distant from the inlet/outlet port in a direction parallel to a flow direction of the fluid as the distance from the inlet/outlet port increases in a direction perpendicular to the flow direction of the fluid.

3. The thermal collector of claim 1, wherein the fluid guide unit further comprises a uniform distribution region configured to merge or divide the fluid flowing along the flow path to allow the fluid to flow in a uniformly distributed state.

4. The thermal collector of claim 3, wherein the uniform distribution region comprises a collection channel disposed on at least one of upstream and downstream sides from the cavity on the basis of the flow of the fluid and having a shape communicating and elongated in a direction which is not parallel to a flow direction of the fluid.

5. The thermal collector of claim 4, wherein the uniform distribution region comprises a lattice branch channel formed as the flow path is divided into a plurality of paths and the adjacent divided paths are partially connected and communicate with each other.

6. The thermal collector of claim 4, wherein the uniform distribution region comprises a rectilinear branch channel defined by a linear adhesion portion formed by joining the planar body in a direction parallel to the flow direction of the fluid, and the fluid collected in the collection channel flows while being distributed again by the rectilinear branch channel.

7. The thermal collector of claim 4, wherein the collection channel is disposed adjacent to the upstream or downstream side from the cavity, and the collection channel is shaped to become distant from a center of the cavity in a direction parallel to the flow of the fluid as the distance from the center of the cavity increases in a direction perpendicular to the flow of the fluid.

8. The thermal collector of claim 4, wherein the uniform distribution region further comprises an intermediate channel elongated in a longitudinal direction of the flow path and disposed along a lateral side of the cavity, the intermediate channel being configured to communicate with the collection channel,

   wherein the uniform distribution region has a relationship represented by the following expression,

   $$[\text{Expression}]$$
   $$1.5 \cdot n \cdot a \geq b \geq 0.5 \cdot n \cdot a$$

   and
   wherein a represents a longitudinal sectional area of the flow path communicating with the collection channel,
   b represents a longitudinal sectional area of the intermediate channel, and
   n represents the number of multiple flow paths communicating with the collection channel.

9. The thermal collector of claim 2, wherein the fluid guide unit further comprises a first uniform distribution region disposed between the slope and the flow path.

10. The thermal collector of claim 9, wherein the first uniform distribution region merges or divides the fluid flowing along the slope to allow the fluid to flow to the flow path in a uniformly distributed state.

11. The thermal collector of claim 9, wherein the fluid guide unit further comprises a second uniform distribution region disposed between the flow path and the cavity.

12. The thermal collector of claim 11, wherein the fluid guide unit further comprises a collection channel disposed between the flow path and the second uniform distribution region on the basis of the flow of the fluid and having a shape communicating and elongated in a direction which is not parallel to the flow direction of the fluid.

13. The thermal collector of claim 1, wherein the planar body comprises:

a plurality of flow-path-dividing adhesion portions elongated in a longitudinal direction of the thermal collector and configured to define the flow path; and

a bore-forming adhesion portion having a width larger than a width of each of the flow-path-dividing adhesion portions so that the bore-forming adhesion portion overlaps the two or more flow-path-dividing adhesion portions among the plurality of flow-path-dividing adhesion portions on the basis of the longitudinal direction of the thermal collector.

14. A method of manufacturing a thermal collector for cooling a solar panel, the method comprising:

stacking a pair of layers;
forming a planar body having a flow path by joining the pair of layers along a preset fluid guide unit pattern; and
forming a cavity in the planar body,
wherein the pair of layers is made of synthetic resin, and
wherein the forming of the planar body comprises forming the fluid guide unit by welding, by high-frequency welding, a portion of the pair of layers which excludes the preset fluid guide unit pattern.

15. A method of manufacturing a thermal collector for cooling a solar panel, the method comprising:

printing a preset fluid guide unit pattern on a pair of layers;
stacking the pair of layers;
forming a planar body by partially joining the pair of layers;
forming a fluid guide unit on the planar body by injecting air into a space between the pair of layers; and
forming a cavity in the planar body,
wherein the pair of layers is made of aluminum, and
wherein the forming of the planar body comprises partially melting and joining the pair of layers by pressing and heating the pair of layers in a state in which the pair of layers is aligned.

16. The method of claim 14 or 15, wherein the forming of the cavity in the planar body comprises forming the cavity by boring a portion of the planar body where the fluid guide unit is not formed.

FIG.1

FIG.2

FIG.3

111    111    11    111

151    151

FIG.4

111    11    112    12

1534

FIG.5

FIG.6

FIG.7

FIG.8

FIG.9

FIG.10

FIG.11

```
                    ┌─────────────┐
                    │    START    │
                    └──────┬──────┘
                           │                        21
                           ▼
        ┌──────────────────────────────────────────┐
        │           STACK PAIR OF LAYERS            │
        └──────────────────┬───────────────────────┘
                           │                        22
                           ▼
        ┌──────────────────────────────────────────┐
        │ FORM PLANAR BODY BY JOINING PAIR OF LAYERS │
        │   ALONG PRESET FLUID GUIDE UNIT PATTERN    │
        └──────────────────┬───────────────────────┘
                           │                        23
                           ▼
        ┌──────────────────────────────────────────┐
        │          FORM CAVITY IN PLANAR BODY       │
        └──────────────────┬───────────────────────┘
                           │
                           ▼
                    ┌─────────────┐
                    │     END     │
                    └─────────────┘
```

FIG.12

START

PRINT PRESET FLUID GUIDE UNIT ON PAIR OF LAYERS — 31

STACK PAIR OF LAYERS — 32

FORM PLANAR BODY BY WELDING PAIR OF LAYERS — 33

INJECT AIR INTO SPACE BETWEEN PAIR OF LAYERS — 34

FORM CAVITY IN PLANAR BODY — 35

END

FIG.13

<table>
<tr><td colspan="2">INTERNATIONAL SEARCH REPORT</td><td>International application No.</td></tr>
<tr><td colspan="2"></td><td>**PCT/KR2020/007565**</td></tr>
</table>

**A. CLASSIFICATION OF SUBJECT MATTER**

*H02S 40/42(2014.01)i, H02S 40/22(2014.01)i, F28D 9/00(2006.01)i, F28F 3/02(2006.01)i*

According to International Patent Classification (IPC) or to both national classification and IPC

**B. FIELDS SEARCHED**

Minimum documentation searched (classification system followed by classification symbols)

H02S 40/42; B01J 19/24; B01J 8/02; H01L 31/052; H01M 10/613; H01M 10/6568; H01M 8/02; H05K 7/20; H02S 40/22; F28D 9/00; F28F 3/02

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: solar cell panel, cavity, flow path, bonding

**C. DOCUMENTS CONSIDERED TO BE RELEVANT**

| Category* | Citation of document, with indication, where appropriate, of the relevant passages | Relevant to claim No. |
|---|---|---|
| Y | KR 10-2011-0001489 A (TM TECH CO., LTD.) 06 January 2011<br>See paragraph [0029]; claim 1; and figures 6-8. | 1-16 |
| Y | KR 10-2016-0060837 A (KOREA INSTITUTE OF ENERGY RESEARCH) 31 May 2016<br>See paragraph [0035]; and figure 2. | 1-16 |
| Y | KR 10-2008-0111695 A (SAMSUNG SDI CO., LTD.) 24 December 2008<br>See paragraph [0043]; and figure 3a. | 1-16 |
| Y | KR 10-1822304 B1 (HYUNDAI MOTOR COMPANY) 25 January 2018<br>See paragraphs [0040] and [0058]; and figures 3-4. | 2-13 |
| A | US 2006-0225867 A1 (PARK, Hee-sung et al.) 12 October 2006<br>See paragraphs [0048]-[0058]; and figures 8-9. | 1-16 |

☐ Further documents are listed in the continuation of Box C.  ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 25 SEPTEMBER 2020 (25.09.2020) | **25 SEPTEMBER 2020 (25.09.2020)** |

| Name and mailing address of the ISA/KR | Authorized officer |
|---|---|
| Korean Intellectual Property Office<br>Government Complex Daejeon Building 4, 189, Cheongsa-ro, Seo-gu, Daejeon, 35208, Republic of Korea<br>Facsimile No. +82-42-481-8578 | <br>Telephone No. |

Form PCT/ISA/210 (second sheet) (January 2015)

INTERNATIONAL SEARCH REPORT
Information on patent family members

International application No.

**PCT/KR2020/007565**

| Patent document cited in search report | Publication date | Patent family member | Publication date |
|---|---|---|---|
| KR 10-2011-0001489 A | 06/01/2011 | KR 10-1041102 B1 | 13/06/2011 |
| KR 10-2016-0060837 A | 31/05/2016 | KR 10-1655889 B1 | 09/09/2016 |
| | | US 2016-0144467 A1 | 26/05/2016 |
| | | US 9643288 B2 | 09/05/2017 |
| KR 10-2008-0111695 A | 24/12/2008 | KR 10-0882701 B1 | 06/02/2009 |
| | | US 2008-0318114 A1 | 25/12/2008 |
| KR 10-1822304 B1 | 25/01/2018 | CN 107978819 A | 01/05/2018 |
| | | US 10326186 B2 | 18/06/2019 |
| | | US 2018-0115031 A1 | 26/04/2018 |
| US 2006-0225867 A1 | 12/10/2006 | CN 1849051 A | 18/10/2006 |
| | | JP 2006-295178 A | 26/10/2006 |
| | | KR 10-0619076 B1 | 31/08/2006 |

Form PCT/ISA/210 (patent family annex) (January 2015)